# DEMANDE DE BREVET EUROPEEN

(11) **EP 3 629 314 A1**
(43) Date de publication de la demande: **01.04.2020**
(21) Numéro de dépôt: 19199763.4
(22) Date de dépôt: 26.09.2019
(51) Int. Cl.: G08G 5/00

(54) **PROCÉDÉ DE PLANIFICATION DU VOL D'UN AÉRONEF, PRODUIT PROGRAMME PRODUIT ORDINATEUR ET SYSTÈME DE PLANIFICATION ASSOCIÉS**

(30) Priorité: 26.09.2018 FR 1800998
(71) Demandeur: Thales, 92400 Courbevoie (FR)
(72) Inventeur: MENNECHET, Florent, 33700 MERIGNAC (FR); BOTA, Valéry, 33700 MERIGNAC (FR)
(74) Mandataire: Lavoix

(57) **Abrégé**

L'invention concerne un procédé de planification du vol d'un aéronef (12) pilotable par au moins un pilote (14) et comprenant un système de gestion de vol et un écran d'affichage tête basse (24) tactile, le procédé de planification comprenant les étapes suivantes :
- acquisition d'une information relative à un déplacement tactile effectué par le pilote (14) sur l'écran d'affichage tête basse (24), l'écran d'affichage tête basse (24) affichant une carte géographique de l'environnement de l'aéronef (12) ;
- association de l'information relative au déplacement tactile du pilote (14) à un premier ensemble de points géographiques de la carte géographique, le premier ensemble de points géographiques étant exploitable par le système de gestion de vol ; et
- affichage du premier ensemble des points géographiques sur l'écran d'affichage tête basse (24).

## Description

La présente invention concerne un procédé de planification du vol d'un aéronef pilotable par au moins un pilote et comprenant un système de gestion de vol et un écran d'affichage tactile, l'écran d'affichage affichant un plan de l'environnement de l'aéronef.

La présente invention concerne également un produit programme ordinateur et un système de planification associés.

Il est connu de planifier le vol de l'aéronef en amont du décollage en définissant un plan de vol et de la trajectoire planifiée à suivre par l'aéronef. Toutefois, la définition de la trajectoire s'effectue point par point, chaque point étant entré manuellement dans le système de gestion de vol.

La définition de la trajectoire est donc longue et peu intuitive. En particulier, il est compliqué pour le pilote de modifier cette trajectoire ou d'ajouter des informations complémentaires dans le système de gestion de vol durant le vol de l'aéronef.

La présente invention a donc pour but d'améliorer la communication entre le système de gestion de vol et le pilote.

A cet effet, l'invention a pour objet un procédé de planification de vol dans un aéronef pilotable par au moins un pilote et comprenant un système de gestion de vol et un écran d'affichage tactile, le procédé de planification comprenant les étapes suivantes :
- acquisition d'une information relative à un déplacement tactile effectué par le pilote sur l'écran d'affichage tête basse, l'écran d'affichage tête basse affichant une carte géographique de l'environnement de l'aéronef ;
- association de l'information relative au déplacement tactile du pilote à un premier ensemble de points géographiques de la carte géographique, le premier ensemble de points géographiques étant exploitable par le système de gestion de vol ; et
- affichage du premier ensemble des points géographiques sur l'écran d'affichage tête basse.

Suivant d'autres aspects avantageux de l'invention, le procédé de planification comprend une ou plusieurs des caractéristiques suivantes, prise(s) isolément ou suivant toutes les combinaisons techniquement possibles :
- le procédé de planification comprend en outre une étape d'émission du premier ensemble de points géographiques à un système distant de l'aéronef ;
- le procédé de planification comprend en outre une étape de réception d'au moins un deuxième ensemble de points géographiques de l'extérieur de l'aéronef et une étape d'affichage du deuxième ensemble de points géographiques sur l'écran d'affichage tête basse ;
- le procédé de planification comprend en outre une étape d'affichage du premier ensemble des points géographiques sur un écran tête haute de l'aéronef ;
- l'information acquise lors du déplacement tactile du pilote le long d'une ligne fermée est la surface intérieure définie par la ligne fermée, le premier ensemble de points géographiques étant alors une zone géographique d'intérêt pour le système de gestion de vol ;
- le procédé de planification comprend en outre une étape de construction d'une trajectoire de l'aéronef programmée dans le système de gestion de vol à partir du premier ensemble des points géographiques associés au déplacement tactile du pilote le long d'une ligne ouverte ;
- le procédé de planification comprend une étape de validation ou d'annulation de l'affichage par le pilote ; et
- le procédé de planification comprend une étape de stockage dans une mémoire interne de l'aéronef de l'ensemble de points géographiques.

L'invention a également pour objet un produit programme d'ordinateur comportant des instructions logicielles qui, lorsque mises en œuvre par un équipement informatique, mettent en œuvre un procédé de planification tel que défini ci-dessus.

L'invention a également pour objet un système de planification configuré pour être embarqué dans un aéronef pilotable par au moins un pilote et comprenant un système de gestion de vol et un écran d'affichage tête basse tactile, l'écran d'affichage tête basse étant configuré pour afficher un carte géographique de l'environnement de l'aéronef ; le système de planification comprenant :
- un module d'acquisition configuré pour acquérir un déplacement tactile effectuée par le pilote sur l'écran d'affichage tête basse ;
- un module de traitement configuré pour associer le déplacement tactile du pilote à un premier ensemble de points géographiques du plan exploitable par le système de gestion de vol ; et
- un module de visualisation configuré pour afficher le premier ensemble des points géographiques sur l'écran d'affichage tête basse.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système de planification selon l'invention disposé dans un aéronef ;
- la figure 2 est une vue de côté schématique d'un cockpit de l'aéronef de la figure 1 ;
- la figure 3 est une vue schématique de l'intérieur du cockpit de la figure 2 ;
- la figure 4 est un organigramme d'un procédé de planification selon l'invention, le procédé étant mis en œuvre par le système d'affichage de la figure 1.

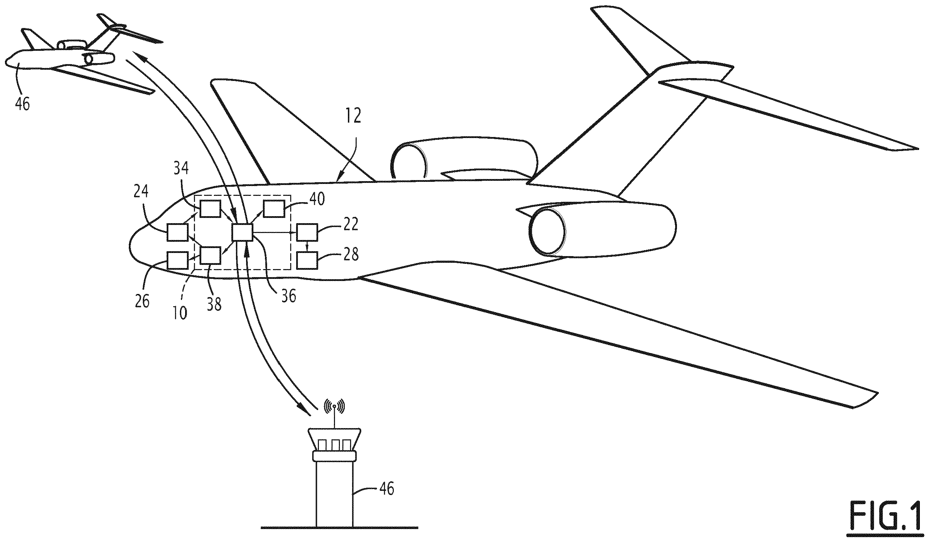

Un système de planification 10 est représenté sur la figure 1. Ce système 10 est embarqué dans un aéronef 12.

On comprend ici par aéronef 12, tout avion ou hélicoptère ou tout autre engin volant pilotable par un pilote 14 à partir de cet engin.

Selon un autre exemple de réalisation, l'aéronef 12 est un drone pilotable à distance. Dans ce cas, le système de planification 10 est disposé dans un centre de contrôle, par exemple terrestre, à partir duquel le pilotage du drone est effectué.

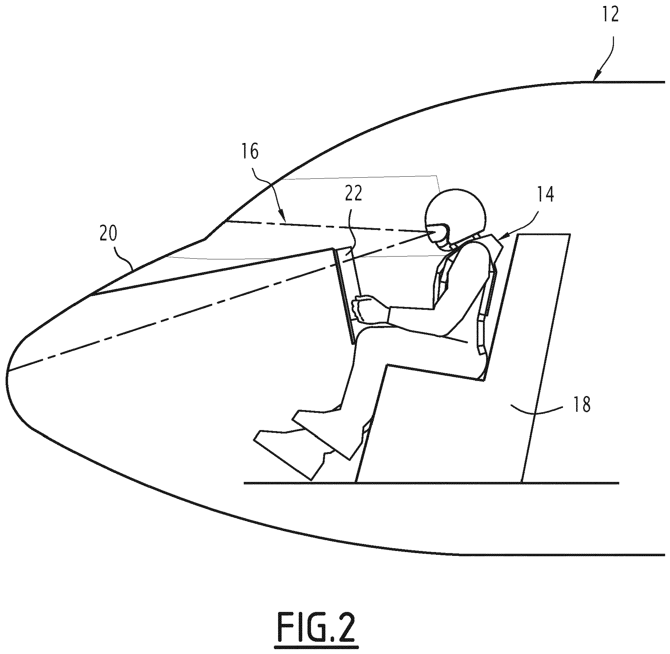

Comme visible sur la figure 2, l'aéronef 12 comprend un cockpit 16.

Le cockpit 16 comporte au moins un siège 18 du pilote 14 et un pare-brise 20 au moins partiellement transparent et séparant l'intérieur du cockpit 16 de l'environnement extérieur de l'aéronef 12.

L'aéronef 12 comprend en outre un système de gestion de vol 22 et un écran d'affichage tête basse 24.

Dans un mode de réalisation avantageux, l'aéronef 12 comprend en outre un écran d'affichage tête haute 26.

Le système de gestion de vol 22 (ou *Flight Managment System* en anglais) est un calculateur embarqué dans l'aéronef 12 disposant d'un logiciel configuré pour assister le pilote 14 pendant le vol de l'aéronef 12 en fournissant par exemple des renseignements sur le pilotage, la navigation, la consommation de carburant, etc.

Le système de gestion de vol 22 est en outre configuré pour déterminer une trajectoire de l'aéronef 12 à partir d'un ensemble de points géographiques fournis par le pilote 14.

Le système de gestion de vol 22 est avantageusement configuré pour optimiser cette trajectoire en fonction de contraintes de coût ou de durée du vol ainsi qu'en fonction de zones géographiques d'intérêt à viser ou à éviter.

Le système de gestion de vol 22 est avantageusement couplé à un système de pilotage automatique 28 de l'aéronef 12 configuré pour guider sans intervention humaine l'aéronef 12 le long de la trajectoire définie par le pilote 14.

L'écran d'affichage tête basse 24 est disposé dans le cockpit 16 en regard du pilote 14.

L'écran d'affichage tête basse 24 est configuré pour afficher des informations dans l'aéronef 12. En particulier, l'écran d'affichage 24 est configuré pour afficher une carte géographique de l'environnement de l'aéronef 12.

La carte géographique est une représentation schématique de l'environnement de l'aéronef 12.

La carte géographique est constituée d'un ensemble de points géographiques, chaque point géographique étant associé à un emplacement précis de l'environnement de l'aéronef 12.

Chaque point géographique est défini par ses coordonnées géographiques, par exemple, par sa latitude et sa longitude.

L'écran d'affichage tête basse 24 est en outre tactile. Il est configuré pour détecter chaque déplacement tactile effectué par le pilote 14 sur l'écran d'affichage tête basse 24.

L'écran d'affichage tête haute 26 est disposé dans le cockpit 16 en regard du pilote 14.

L'écran d'affichage tête haute 26 est au moins partiellement transparent.

Avantageusement, l'écran d'affichage tête haute 26 est une visière intégrée dans un casque 30 propre à être porté par le pilote 14, comme visible sur la figure 2.

L'écran d'affichage tête haute 26 est configuré pour afficher des informations qui sont, pour le pilote 14, superposées sur l'environnement extérieur de l'aéronef 12.

Ce type d'affichage est dit « conforme » car les informations affichées viennent se placer sur les positions réelles des éléments extérieurs et permet ainsi d'afficher l'information du paysage réel. Pour cela, ce type d'affichage dépend directement de la position de l'aéronef 12, de l'attitude de l'aéronef 12 et de l'orientation de l'axe de vision du pilote 14.

Par opposition au terme « conforme », le type d'affichage de l'écran d'affichage tête basse 24 mentionné précédemment, est connu dans l'état de la technique sous le terme « non-conforme ». En particulier, ce type d'affichage dépend du vecteur de vitesse de l'aéronef 12 et ne change pas avec les changements de l'attitude de celui-ci.

L'écran d'affichage tête haute 26 est disposé entre les yeux du pilote 14 et le pare-brise 20 de l'aéronef 12.

En variante, l'écran d'affichage tête haute 26 est une surface transparente fixée dans le cockpit 16 et placée devant le pilote 14.

Le système de planification 10 comprend un module d'acquisition 34, un module de traitement 36, un module de visualisation 38 et une mémoire interne 40.

Chaque module 34, 36, 38 du système de planification 10 se présente par exemple sous la forme d'un logiciel mis en œuvre par un calculateur adapté et/ou au moins partiellement d'un circuit logique programmable, par exemple de type FPGA (de l'anglais *Field Programmable Gate Array*).

Le module d'acquisition 34 est configuré pour acquérir des informations relatives à chaque déplacement tactile effectué par le pilote 14 sur l'écran d'affichage tête basse 24. L'écran d'affichage tête basse 24 affichant la carte géographique de l'environnement de l'aéronef 12, le déplacement tactile du pilote 14 est effectué en superposition de la carte géographique.

En particulier, le module d'acquisition 34 est configuré pour acquérir une forme géométrique associée au déplacement tactile.

Le module d'acquisition 34 est configuré en outre pour détecter si le déplacement tactile du pilote 14 s'effectue le long d'une ligne ouverte 42 ou d'une ligne fermée 44.

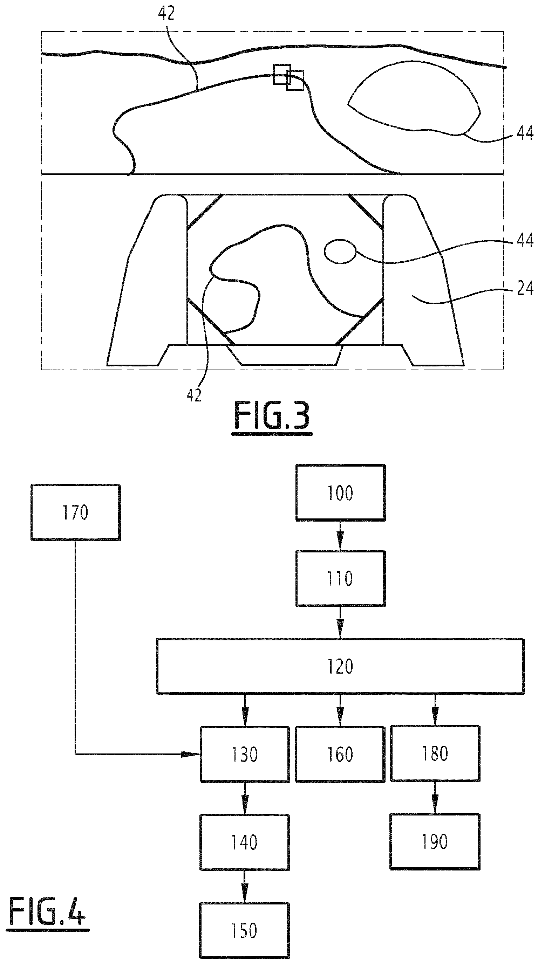

Comme visible sur la figure 3, par « ligne ouverte », on entend une ligne dont les extrémités ne sont pas confondues.

Inversement, par « ligne fermée », on entend une ligne dont les extrémités sont confondues.

Lors du déplacement tactile du pilote 14 le long d'une ligne ouverte 42, la forme acquise par le module d'acquisition 34 est directement la ligne ouverte 42.

Lors du déplacement tactile du pilote 14 le long d'une ligne fermée 44, la forme acquise par le module d'acquisition 34 est la surface intérieure définie par la ligne fermée 44.

Le module d'acquisition 34 est configuré pour envoyer la forme acquise au module de traitement 36.

Le module de traitement 36 est configuré pour associer le déplacement tactile du pilote 14, en particulier la forme acquise par le module d'acquisition 34, à un premier ensemble de points géographiques de la carte géographique.

En particulier, le module de traitement 36 est configuré pour associer à chaque point du déplacement tactile sur l'écran d'affichage 24, le point géographique de la carte pointé tactilement par le pilote 14 sur la carte en prenant en compte le relief de la carte géographique.

Lors du déplacement tactile du pilote 14 le long d'une ligne ouverte 42, le premier ensemble de points géographiques est alors une ligne.

Lors du déplacement tactile du pilote 14 le long d'une ligne fermée 44, le premier ensemble de points géographiques est alors une zone bidimensionnelle.

Le module de traitement 36 est configuré pour envoyer la position du premier ensemble des points géographiques au système de gestion de vol 22.

Le module de traitement 36 est en outre avantageusement configuré pour envoyer la position du premier ensemble des points géographiques à au moins un système distant 46 de l'aéronef 12.

L'élément distant 46 est par exemple un aéronef environnant ou un tour de contrôle, comme visible sur la figure 1.

Le module de traitement 36 est en outre avantageusement configuré pour recevoir au moins un deuxième ensemble de points géographiques envoyé par au moins un élément distant 46. Le module de traitement 36 est configuré pour envoyer la position de du deuxième ensemble des points géographiques au système de gestion de vol 22 et au module d'affichage 38.

De plus, le module de traitement 36 est avantageusement configuré pour stocker l'au moins un ensemble de points géographiques dans la mémoire interne 40 de l'aéronef 12.

L'au moins un ensemble de points géographiques est exploitable par le système de gestion de vol 22.

En particulier, le système de gestion de vol 22 est configuré pour construire une trajectoire de l'aéronef 12 à partir de l'ensemble des points géographiques associés au déplacement tactile du pilote 14 le long d'une ligne ouverte 42 et avantageusement à partir de l'au moins un deuxième ensemble de points géographiques reçu de l'élément distant 46.

Le système de gestion de vol 22 est également configuré pour prendre en compte dans le calcul de la trajectoire la zone géographique d'intérêt à partir de l'ensemble des points géographiques associés au déplacement tactile du pilote 14 le long d'une ligne fermé 44 et avantageusement à partir de l'au moins un deuxième ensemble de points géographiques reçu de l'élément distant 46.

Le système de gestion de vol 22 est configuré pour envoyer la trajectoire construite de l'aéronef 12 au système de pilotage automatique 28.

Le module de visualisation 38 est configuré pour afficher l'ensemble des points géographiques sur l'écran d'affichage tête basse 24.

Avantageusement, le module de visualisation 38 est configuré pour afficher en outre l'ensemble des points géographiques sur l'écran d'affichage tête haute 26.

Le module de visualisation 38 est en outre configuré pour afficher sur l'écran d'affichage tête basse 24, au moins un bouton permettant au pilote 14 de valider ou d'annuler l'affichage de l'ensemble des points géographiques sur l'écran d'affichage tête basse 24 et l'écran d'affichage tête haute 26.

Le module d'acquisition 34 est configuré pour détecter le contact d'un doigt du pilote 14 sur l'au moins un bouton et pour envoyer l'information au module de traitement 36.

Le module d'acquisition 34 est configuré pour détecter le contact d'un doigt du pilote 14 sur l'au moins un bouton et pour envoyer l'information au module de traitement 36.

Le module de traitement 36 est configuré pour annuler l'affichage l'ensemble des points géographiques sur les écrans d'affichages 24, 26 en cas de demande d'annulation du pilote 14.

Le module de traitement 36 est avantageusement configuré pour stocker l'au moins un ensemble de points géographiques dans la mémoire interne 40 de l'aéronef 12 en cas de demande de validation du pilote 14.

Un procédé de planification de vol selon l'invention dans un aéronef 12 va maintenant être décrit en référence à la figure 4 présentant un organigramme de ses étapes.

Initialement, le pilote 14 est installé dans le cockpit 16.

Lors de l'étape initiale 100, le pilote déplace au moins un doigt sur l'écran d'affichage tête basse 24 tactile.

Puis, lors de l'étape 110, le module d'acquisition 34 acquiert une information relative au déplacement tactile du pilote 14 sur l'écran d'affichage tête basse 24.

En particulier, le module d'acquisition 34 acquiert une forme géométrique associée au déplacement tactile.

Le module d'acquisition 34 détecte en outre si le déplacement tactile du pilote 14 s'effectue le long d'une ligne ouverte 42 ou d'une ligne fermée 44.

Le module d'acquisition 34 envoie alors l'information associée au déplacement tactile au module de traitement 36.

Lors de l'étape 120, le module de traitement 36 associe l'information relative au déplacement tactile du pilote 14 à un premier ensemble de points géographiques de la carte géographique exploitable par le système de gestion de vol 22.

En particulier, lors du déplacement tactile du pilote 14 le long d'une ligne ouverte 42, le premier ensemble de points géographiques est alors une ligne.

Lors du déplacement tactile du pilote 14 le long d'une ligne fermée 44, le premier ensemble de points géographiques est alors zone bidimensionnelle.

Le module de traitement 36 envoie la position de l'ensemble des points géographiques au module de visualisation 38 et au système de gestion de vol 22.

Puis, lors de l'étape 130, le module de visualisation 38 affiche l'ensemble des points géographiques sur l'écran d'affichage tête basse 24.

Avantageusement, le module de visualisation 38 affiche en outre l'ensemble des points géographiques sur l'écran d'affichage tête haute 26.

Puis, le procédé de planification comprend une étape optionnelle 140 de validation ou d'annulation par le pilote 14 de l'affichage des points géographiques sur les écrans 24, 26.

Suite à la validation du pilote 14 lors de l'étape 140, lors de l'étape 150 l'ensemble des points géographiques est stocké dans la mémoire interne 40 de l'aéronef 12.

Suite à l'étape 120, le procédé de planification comprend avantageusement une étape 160 d'émission de l'ensemble de points géographiques à l'au moins un système distant 46 de l'aéronef 12.

En parallèle des étapes 100 à 120, le procédé de planification comprend avantageusement une étape 170 de réception d'au moins un deuxième ensemble de points géographiques de l'extérieur de l'aéronef 12. Le deuxième ensemble de points géographiques est envoyé par l'au moins un système distant 46 éventuellement différent de celui de l'étape 160.

Puis, le deuxième ensemble de points géographiques est affiché sur l'écran d'affichage tête basse 24 et avantageusement sur l'écran d'affichage tête haute 26 pendant l'étape 130.

Suite à l'étape 120, le système de gestion de vol 22 construit une trajectoire de l'aéronef 12 à partir de l'ensemble des points géographiques associés au déplacement tactile du pilote 14 le long d'une ligne ouverte 42 et avantageusement à partir de l'au moins un deuxième ensemble de points géographiques reçu de l'élément distant 46.

Le système de gestion de vol 22 prend également en compte dans le calcul de la trajectoire la zone géographique d'intérêt à partir de l'ensemble des points géographiques associés au déplacement tactile du pilote 14 le long d'une ligne fermé 44, et avantageusement à partir de l'au moins un deuxième ensemble de points géographiques reçu de l'élément distant 46.

Le système de gestion de vol 22 envoie ensuite la trajectoire construite de l'aéronef 12 au système de pilotage automatique 28.

Lors d'une étape 190, le système de pilotage automatique 28 guide sans intervention humaine l'aéronef 12 le long de la trajectoire définie par le pilote 14.

On conçoit alors que la présente invention présente un certain nombre d'avantages.

Tout d'abord, le procédé de planification de vol selon l'invention permet une élaboration de trajectoires et de stratégie rapide. En effet, la définition tactile des trajectoires et des zones d'intérêt sur l'écran d'affichage tête basse 24 est très intuitif pour le pilote 14.

La trajectoire de l'aéronef 12 est facilement reprogrammable pendant le vol et le pilote 14 peut renseigner aisément des obstacles ou de nouveaux objectifs géographiques à prendre en compte.

L'invention améliore ainsi la communication entre le système de gestion de vol 22 et le pilote 14.

De plus, le procédé de planification permet une communication améliorée entre le pilote 14 et les éléments distants 46 extérieurs à l'aéronef 12 tels les aéronefs environnants ou une tour de contrôle.

Le partage de trajectoire ou de zones géographiques ne nécessite pas l'utilisation de la parole et permet ainsi une communication et une compréhension plus aisées. En effet, la reconnaissance des formes est universelle et ne dépend pas de la langue, de la culture ou de l'âge du pilote 14.

Ainsi, il est aisé grâce à l'invention d'établir rapidement des stratégies ou des modifications de trajectoires en collaboration avec les éléments distants 46. L'invention permet donc d'importants gains de temps et une meilleure réactivité du pilote 14 en cas de situation imprévue.

Enfin, le stockage des points géographiques dans la mémoire interne 40 permet d'obtenir un historique des points géographiques et un partage avec les différents éléments distants 46 au cours du temps afin de faciliter l'élaboration des vols futurs de l'aéronef 12.

## Revendications

1. Procédé de planification du vol d'un aéronef (12) pilotable par au moins un pilote (14) et comprenant :
- un système de gestion de vol (22) ; et
- un écran d'affichage tête basse (24) tactile,
le procédé de planification comprenant les étapes suivantes :
- acquisition d'une information relative à un déplacement tactile effectué par le pilote (14) sur l'écran d'affichage tête basse (24), l'écran d'affichage tête basse (24) affichant une carte géographique de l'environnement de l'aéronef (12) ;
- association de l'information relative au déplacement tactile du pilote (14) à un premier ensemble de points géographiques de la carte géographique, le premier ensemble de points géographiques étant exploitable par le système de gestion de vol (22) ; et
- affichage du premier ensemble des points géographiques sur l'écran d'affichage tête basse (24).

2. Procédé de planification selon la revendication 1, comprenant en outre une étape d'émission du premier ensemble de points géographiques à un système distant (46) de l'aéronef (12).

3. Procédé de planification selon la revendication 1 ou 2, comprenant en outre une étape de réception d'au moins un deuxième ensemble de points géographiques de l'extérieur de l'aéronef (12) et une étape d'affichage du deuxième ensemble de points géographiques sur l'écran d'affichage tête basse (24).

4. Procédé de planification selon l'une quelconque des revendications précédentes, comprenant en outre une étape d'affichage du premier ensemble des points géographiques sur un écran tête haute (26) de l'aéronef (12).

5. Procédé de planification selon l'une quelconque des revendications précédentes, dans lequel l'information acquise lors du déplacement tactile du pilote (14) le long d'une ligne fermée est la surface intérieure définie par la ligne fermée (44), le premier ensemble de points géographiques étant alors une zone géographique d'intérêt pour le système de gestion de vol (22).

6. Procédé de planification selon l'une quelconque des revendications précédentes, comprenant en outre une étape de construction d'une trajectoire de l'aéronef (12) programmée dans le système de gestion de vol (22) à partir du premier ensemble des points géographiques associés au déplacement tactile du pilote (14) le long d'une ligne ouverte (42).

7. Procédé de planification selon l'une quelconque des revendications précédentes, comprenant une étape de validation ou d'annulation de l'affichage par le pilote (14).

8. Procédé de planification selon l'une quelconque des revendications précédentes, comprenant une étape de stockage dans une mémoire interne (40) de l'aéronef (12) de l'ensemble de points géographiques.

9. Produit programme d'ordinateur comportant les instructions logicielles qui, lorsque mises en œuvre par un équipement informatique, mettent en œuvre le procédé de planification selon l'une quelconque des revendications précédentes.

10. Système de planification (10) configuré pour être embarqué dans un aéronef (12) pilotable par au moins un pilote (14) et comprenant :
- un système de gestion de vol (22) ; et
- un écran d'affichage tête basse (24) tactile, l'écran d'affichage tête basse (24) étant configuré pour afficher un carte géographique de l'environnement de l'aéronef (12) ;
le système de planification (10) comprenant :
- un module d'acquisition (34) configuré pour acquérir un déplacement tactile effectuée par le pilote (14) sur l'écran d'affichage tête basse (24) ;
- un module de traitement (36) configuré pour associer le déplacement tactile du pilote (14) à un premier ensemble de points géographiques du plan exploitable par le système de gestion de vol (22) ; et
- un module de visualisation (38) configuré pour afficher le premier ensemble des points géographiques sur l'écran d'affichage tête basse (24).
